# EUROPEAN PATENT SPECIFICATION

(11) **EP 2 602 840 B1**
(45) Date of publication and mention of the grant of the patent: **08.07.2015**
(21) Application number: 11814800.6
(22) Date of filing: 30.07.2011
(51) Int. Cl.: H01M 2/02, H01M 2/34, H01M 2/26, H01M 2/12

(54) **SECONDARY BATTERY POUCH HAVING IMPROVED STABILITY, POUCH-TYPE SECONDARY BATTERY USING SAME, AND MEDIUM- OR LARGE-SIZED BATTERY PACK**
SEKUNDÄRBATTERIEBEUTEL MIT VERBESSERTER STABILITÄT, BEUTEL-SEKUNDÄRBATTERIE DAMIT UND MITTELGROSSES ODER GROSSES BATTERIEPACK
POCHE DE BATTERIE SECONDAIRE À STABILITÉ AMÉLIORÉE, BATTERIE SECONDAIRE DU TYPE POCHE L'UTILISANT, ET BLOC-BATTERIE DE TAILLE MOYENNE OU GRANDE

(30) Priority: 27.05.2011 KR 20110050759; 05.08.2010 KR 20100075468
(43) Date of publication of application: 12.06.2013
(73) Proprietor: LG Chem, Ltd., Yeongdeungpo-gu, Seoul 150-721 (KR)
(72) Inventor: CHO, Seung Su, Daejeon 305-340 (KR); YOON, You Rim, Daejeon 305-340 (KR); CHOI, Seung Don, Daejeon 305-761 (KR); JEON, Ho Jin, Daejeon 305-743 (KR); CHOI, Dae Sik, Daejeon 305-340 (KR); KWON, Dae Hong, Daejeon 302-740 (KR)
(74) Representative: Cabinet Plasseraud
(86) International application number: PCT/KR2011/005637
(87) International publication number: WO 2012/018200

(56) References cited:
- EP-A1- 2 228 849
- KR-A- 20080 036 257
- KR-B1- 100 428 974
- KR-B1- 100 876 455
- KR-B1- 100 889 765
- US-A1- 2001 038 938
- US-A1- 2004 175 609

## Description

### TECHNICAL FIELD

The present invention disclosed herein relates to a pouch having improved safety, a secondary battery including the pouch, and a battery pack

### BACKGROUND ART

As the demand and technology for mobile devices increase, so do those for secondary batteries as an energy source for mobile devices. Of such secondary batteries, there are remarkable advances and commercialization being made for lithium secondary batteries that have high energy density and high discharge voltage.

According to structures of electrode assemblies including a positive electrode, a separator, and a negative electrode, secondary batteries may be classified into jellyroll (winding-type) electrode assemblies in which long sheet-shaped positive and negative electrodes are wound with a separator therebetween; stack-type electrode assemblies in which positive and negative electrodes cut to have certain sizes are sequentially stacked with a separator therebetween; and stack/folding-type electrode assemblies in which Bi-cells or full cells formed by stacking positive and negative electrodes having certain sizes with a separator therebetween are wound.

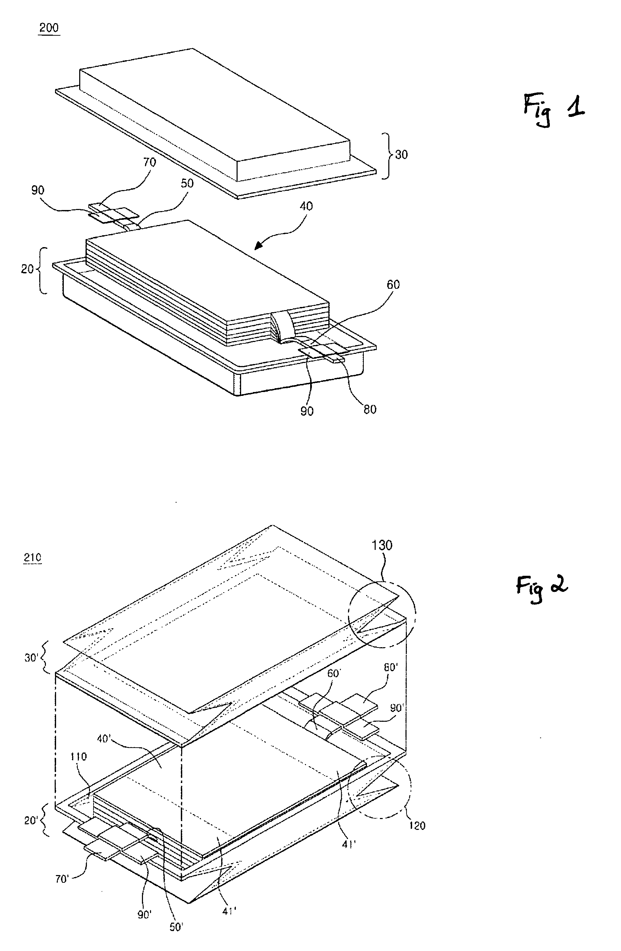

FIG. 1 is an exploded perspective view illustrating a typical pouch-type secondary battery in the related art.

Referring to FIG. 1, a pouch-type secondary battery 200 includes an electrode assembly 40 and a pouch-type battery case.

The electrode assembly 40 may be connected to electrode tabs 50 and 60 extending from the electrode assembly 40, and electrode leads 70 and 80 welded to the electrode tabs 50 and 60. The electrode tabs 50 and 60 or the electrode leads 70 and 80 may protrude in the same direction or different directions. In FIG. 2, the electrode tabs and the electrode leads may protrude in the different directions.

The pouch-type battery case includes a lower battery case 20 and an upper battery case 30. The lower battery case 20 may be separated from the upper battery case 30 as illustrated in FIG. 2. Alternatively, although not shown, one of the four sides may be connected to the upper battery case. Both the lower battery case and the upper battery case as illustrated in FIG. 2, or one thereof may be provided with a space part accommodating the electrode assembly , and a sealing part for sealing the lower battery case and the upper battery case.

After the electrode assembly 40 is accommodated in the space part, the sealing part of the upper battery case 30 and the lower battery case 20 is sealed through heat welding, thereby completing the pouch-type secondary battery.

The electrode assembly 40 is an electricity generating device in which a positive electrode and a negative electrode are sequentially stacked with a separator therebetween, and may have a jellyroll-type, stack-type, or stack/folding-type structure. The electrode tabs 50 and 60 extend from electrode plates of the electrode assembly 40. The electrode leads 70 and 80 are electrically connected to the electrode tabs 50 and 60 extending from the electrode plates, e.g., through welding, and are partially exposed out of the lower and upper battery case 20 and 30. Insulating films 90 are attached to a portion of the top and bottom surfaces of the electrode leads 70 and 80 to improve sealing property and electrical insulation between the portion and the lower and upper battery cases 20 and 30.

The lower and upper battery case 20 and 30 include aluminum laminate sheets, and have a pouch shape as a whole, thereby constituting the pouch-type secondary battery.

A positive electrode tabs 50 and a negative electrode tabs 60 of the electrode assembly 40 that is a stack-type one in FIG. 1 are integrally coupled in the form of a welding portion, e.g., through welding, and thus, the welding portion is connected to the electrode lead 70 or 80.

Accordingly, the electrode leads 70 and 80 with ends opposed to welding portions being exposed are sealed by the lower and upper battery case 20 and 30.

One of main research efforts on such secondary batteries is to improve safety. A main area of research on secondary batteries is improving safety. When a secondary battery operates under abnormal conditions such as with an internal short circuit, in a charge state in which current and voltage exceed allowable thresholds, when exposure to high temperature, or subjected to an external impact or an impact from being dropped, the inner temperature and pressure of the battery may increase, causing the battery to explode. Such explosion may be a main defect of lithium secondary batteries, and thus, one of main research efforts on lithium secondary batteries is to improve safety.

Especially, secondary batteries used in a medium-to-large battery pack that is a power source for electric vehicles and hybrid vehicles are required to have long service life and are concentrated in the battery pack, safety is a critical issue.

Thus, technology for preventing the burning or explosion of a battery cell due to high pressure gas generated in the battery cell or high pressure gas generated under an unexpected condition is needed, thereby ensuring the service life and safety.

### DISCLOSURE

### TECHNICAL PROBLEM

In the related art, a pouch-type secondary battery periodically discharges high pressure gas or includes a venting passage for discharging the gas, thereby preventing expansion of the secondary battery due to high temperature and pressure in the secondary battery, and explosion of the secondary battery due to the expansion.

However, the present invention provides a pouch-type battery case that deforms a pouch-type secondary battery in a predetermined shape with the pressure or force of gas generated in the secondary battery and expanding the secondary battery or bursting a sealing portion to discharge gas, thereby fundamentally cutting off electric current. That is, a pouch-type battery case according to the present invention is designed such that electrode tabs of an electrode assembly are separated from electrode leads when gas or high temperature and pressure generated in a secondary battery including the pouch type battery case damages the battery, thereby fundamentally cutting off electric current.

The present invention also provides a secondary battery including the pouch-type battery case, and a medium-to-large battery module including secondary batteries having the pouch-type battery case.

The present invention also provides a medium-to-large battery pack including medium-to-large battery modules having the secondary batteries.

### TECHNICAL SOLUTION

In one embodiment, a pouch-type battery case includes: a space part accommodating an electrode assembly; an upper battery case; a lower battery case; and a sealing part for sealing the upper and lower battery cases, wherein each of the upper battery case and the lower battery case has a foldable structure formed by bending a spacing edge at least one time, and the spacing edge is disposed in a protruding direction of an electrode lead of the electrode assembly.

The foldable structure may be recessed and bent one time.

Electrode leads of the electrode assembly may protrude in the same direction, and spacing edges disposed over and under the electrode leads may be provided with foldable structures bent at least one time.

Also, the foldable structure of the pouch-type battery case may be recessed and bent in a direction away from the electrode lead such that a folded portion faces the electrode lead.

The foldable structure of the pouch-type battery case may be recessed and bent toward the electrode lead from an opposite side to that of the electrode lead such that a folded portion faces the opposite side.

Electrode leads of the electrode assembly may protrude in both protruding directions, and the spacing edges disposed over and under the electrode leads may be provided with foldable structures bent at least one time.

Foldable structures of the pouch-type battery case may be disposed in the protruding directions of the electrode leads, and folded portions may face opposite sides.

Also, foldable structures of the pouch-type battery case may be disposed in the protruding directions of the electrode leads, and folded portions may face each other.

A folded portion of the foldable structure may have a length corresponding to an electrode non-coating portion of the electrode assembly.

The pouch-type battery case may further include a laminate sheet including a resin layer and a metal layer, wherein the battery case is sealed through heating welding after the electrode assembly is accommodated in the space part.

The laminate sheet may include an aluminum laminate sheet.

In another embodiment, a secondary battery includes: the pouch-type battery case; and an electrode assembly.

The electrode assembly may include a welding portion connecting an end of an electrode tab to an end of an electrode lead.

The welding portion may be configured such that bent surfaces formed by bending the end of the electrode tab and the end of the electrode lead face each other.

Also, the electrode assembly may include at least one fractured recess in an end of an electrode tab or an end of an electrode lead.

The fractured recess may be disposed in an end of the electrode tab or an end of the electrode lead within the pouch-type battery case.

The secondary battery may be a lithium polymer secondary battery.

In another embodiment, a medium-to-large battery module includes: a plurality of unit batteries using the secondary battery as the unit battery, wherein the unit batteries are stacked toward both large side surfaces with respect to a protruding direction of an electrode lead of the secondary battery.

In another embodiment, a medium-to-large battery pack includes: a plurality of unit medium-to-large battery modules using the medium-to-large battery module as the unit medium-to-large battery module.

The medium-to-large battery pack may be used as a power source for power tools; electric vehicles including an electric vehicle (EV), a hybrid electric vehicle (HEV), and a plug-in hybrid electric vehicle (PHEV); electric two-wheeled vehicles including an E-bike and an E-scooter; electric golf carts; electric trucks; and electric commercial vehicles.

### ADVANTAGEOUS EFFECTS

According to the embodiments of the present invention, when the pouch-type secondary battery is manufactured, an additional installing process or an additional installing space is unnecessary. In addition, since the pouch-type secondary battery fundamentally cuts off electric current when gas is generated therein, the service life and safety of the secondary battery can be significantly improved, and the manufacturing costs and the weight thereof can be reduced. Furthermore, the shape of the secondary battery can be easily modified.

### BRIEF DESCRIPTION OF THE DRAWINGS

FIG. 1 is an exploded perspective view illustrating a typical pouch-type secondary battery in the related art;
FIG. 2 is an exploded perspective view illustrating a pouch-type secondary battery according to an embodiment of the present invention;
FIG. 3 is a perspective view illustrating the pouch-type secondary battery of FIG. 2;
FIG. 4 is a perspective view illustrating a state in which the pouch-type secondary battery according to the embodiments of the present invention is expanded in a predetermined direction by expansion of gas in the secondary battery, to thereby separate electrode tabs from electrode leads;
FIG. 5 is a plan view and a side view illustrating the pouch-type secondary battery of FIG. 3;
FIG. 6 is a plan view and a side view illustrating the pouch-type secondary battery of FIG. 4;
FIG. 7 is an exploded perspective view illustrating the pouch-type secondary battery of FIG. 2 provided with fractured recesses;
FIG. 8 is a plan view and a side view illustrating a pouch-type secondary battery according to another embodiment of the present invention;
FIG. 9 is a plan view and a side view illustrating a state in which the pouch-type secondary battery of FIG. 8 is expanded in a predetermined direction by expansion of gas in the secondary battery, to thereby separate electrode tabs from electrode leads;
FIG. 10 is a plan view and a side view illustrating a pouch-type secondary battery including electrode tabs and electrode leads protruding in the same direction according to another embodiment of the present invention;
FIG. 11 is a plan view and a side view illustrating a state in which the pouch-type secondary battery of FIG. 10 is expanded in a predetermined direction by expansion of gas in the secondary battery, to thereby separate the electrode tabs from the electrode leads;
FIG. 12 is plan views and side views illustrating welding portions of electrode tabs and electrode leads in pouch-type secondary batteries according to embodiments of the present invention;
FIG. 13 is a perspective view illustrating a battery module including pouch-type secondary batteries as illustrated in FIG. 2, according to an embodiment of the present invention; and
FIG. 14 is a perspective view illustrating a battery module including pouch-type secondary batteries as illustrated in FIG. 10, according to an embodiment of the present invention.

200,210: a pouch-type secondary battery
20, 20': a lower battery case
30, 30': a upper battery case
40, 40': an electrode assembly
50, 50': a positive electrode tabs
60, 60': a negative electrode tabs
70, 70': a positive electrode leads
80, 80': a negative electrode leads
90, 90': Insulating films
110: a space part of the electrode assembly
120: a spacing edges of the lower battery case
130: a spacing edges of the upper battery case
41: electrode non-coating portion
180: fractured recesses 300: medium-to-large battery module

### BEST MODE

A secondary battery according to the present invention includes

a pouch-type battery case including: a space part accommodating an electrode assembly; an upper battery case; a lower battery case; and a sealing part for sealing the upper and lower battery cases, wherein each of the upper battery case and the lower battery case has a foldable structure formed by bending a spacing edge at least one time, and the spacing edge is disposed in a protruding direction of an electrode lead of the electrode assembly.

Exemplary embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the invention to those skilled in the art.

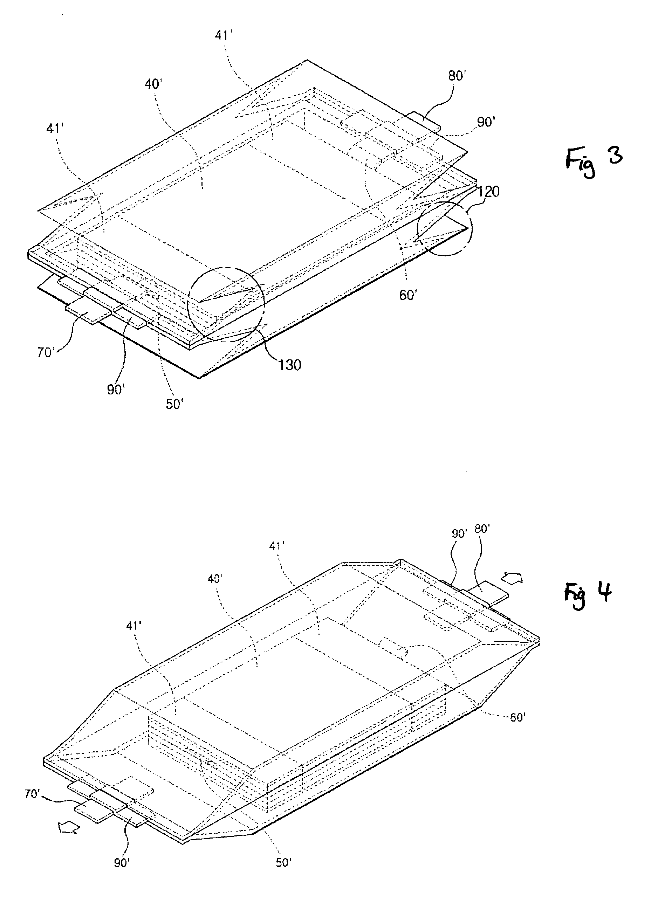

FIG. 2 is an exploded perspective view illustrating a pouch-type secondary battery according to an embodiment of the present invention. FIG. 3 is a perspective view illustrating the pouch-type secondary battery of FIG. 2. FIG. 4 is a perspective view illustrating a state in which the pouch-type secondary battery of FIG. 2 is expanded in a predetermined direction by expansion of gas in the secondary battery, to thereby separate electrode tabs from electrode leads.

Referring to FIG. 2, a pouch-type secondary battery 210 includes a pouch-type battery case. The pouch-type battery case includes a space part 110 accommodating an electrode assembly 40', and a sealing part for sealing an upper battery case 30' and a lower battery case 20'. Since the pouch-type battery case has foldable structures, spacing edges 130 of the upper battery case 30' and spacing edges 120 of the lower battery case 20', which are disposed in protruding directions of electrode leads 70' and 80' of the electrode assembly 40', are folded at least one time.

The foldable structure is formed by recessing and bending the pouch-type battery case including the space part , in a direction. The pouch-type battery case may be recessed and bent at least one time. For example, the pouch-type battery case may be recessed and bent one time according to an accommodating space and thickness of the secondary battery including the pouch-type battery case.

As such, the upper battery case 30' and the lower battery case 20' of the secondary battery are provided with at least one foldable structure disposed in the protruding direction of the electrode leads. Thus, when gas is generated or pressure is increased within the secondary battery , the secondary battery can be efficiently deformed in a predetermined direction.

The secondary battery is more effective when being applied to a medium-to-large module formed by stacking and packaging a plurality of unit batteries using the secondary battery as the unit battery, or to a medium-to-large battery pack including the medium-to-large module, than when being applied to a single secondary battery.

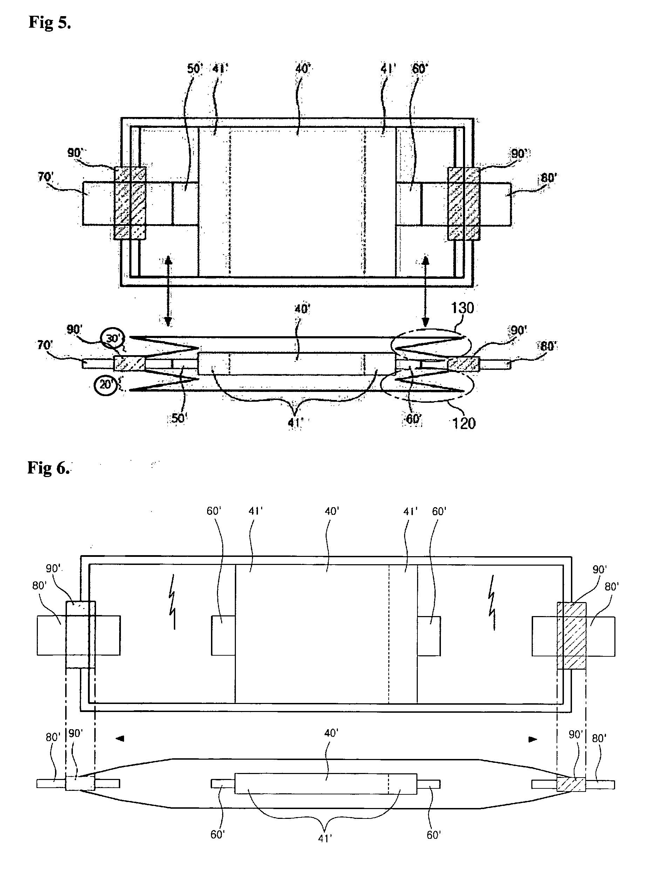

That is, since stacked and packaged unit batteries using the secondary battery 210 as the unit battery and constituting a medium-to-large module or battery pack overlap each other or are stacked in a z-direction of FIG. 5, even though inner pressure or gas of the unit batteries increases, expansion or deformation of the unit batteries in the z-direction is difficult.

As such, since deformation of the unit batteries in the z-direction is difficult within the medium-to-large module or battery pack, when high pressure gas is generated within the unit battery, high expansion stress is applied in an x-direction of FIG. 5, to thereby deform the unit battery in predetermined shape.

In detail, referring to FIG. 5, the secondary battery has the foldable structure on at least one of the spacing edges and of the lower battery case 20' and the upper battery case 30' in the protruding direction of the electrode leads , that is, in the x-direction.

As such, when inner pressure of the secondary battery having the foldable structure increases within a medium-to-large battery module or battery pack including the secondary battery as a unit battery, since the unit batteries are stacked to apply pressure in a y-direction and the z-direction as illustrated in FIG. 5, deformation of the unit battery in the y-direction and the z-direction is difficult, and thus, expansion due to inner gas is concentrated in the x-direction.

Accordingly, referring to FIG. 6, expansion stress applied in the x-direction unfolds the foldable structures formed on the spacing edges , and thus, the battery case expands in the x-direction.

When the battery case expands in the x-direction, the electrode leads sealed together with the lower battery case and the upper battery case are pulled toward the outside of the secondary battery.

Thus, when the unit battery, that is, the secondary battery continually expands in the x-direction toward the outside thereof, and the foldable structures are maximally unfolded, the electrode leads are separated from electrode tabs of the secondary battery to cut off electric current.

The electrode leads or the electrode tabs may be disposed at the same side or different sides. When the electrode leads are disposed at different sides, the foldable structures may be disposed on at least two sides. Alternatively, when the electrode leads are disposed at the same side, the foldable structures may be disposed on one side.

The foldable structures are provided to both the spacing edges 120 and 130 of the lower and upper battery cases 20' and 30' in the protruding direction of the electrode leads , so that the foldable structures can be unfolded by expansion of inner gas.

When pulling force, which pulls the electrode leads , is balanced, maximum stress is applied to the electrode leads . Accordingly, the foldable structures are expanded and unfolded by inner pressure, and the electrode leads , can be efficiently separated from the electrode tabs. If the foldable structure is provided to one of the lower battery case and the upper battery case , unfolding of a foldable part of the battery case due to expansion of inner gas may be difficult.

The foldable structures provided to the spacing edge 130 of the upper battery cases and the spacing edge 120 of the lower battery cases may be the same in shape and size to maximize the pulling force.

The foldable structures provided to the spacing edges 130 and the spacing edges 120 of the battery case as illustrated in FIG. 2 are recessed and folded inward, and the degree of recessing of the battery case is not limited.

However, if the degree of recessing is too small, efficient separation of an electrode lead may be difficult, and thus, reliable cut off of electric current in an emergency may be difficult. On the contrary, if the degree of recessing is too great, deformation of a battery due to production of gas and high pressure in a battery may be delayed. Thus, the degree of recessing of the foldable structure provided to the spacing edge of the lower and upper battery cases (20' and 30') may be adjusted at least such that the electrode lead is completely separated from the electrode tab when the foldable structure is completely unfolded and protrudes outward.

For example, the foldable structure may be recessed inward up to an electrode non-coating portion of the electrode assembly.

Since a method of forming the electrode non-coating portion on an electrode collector, or the shape of the electrode non-coating portion is well known in the art, a description thereof will be omitted.

The electrode non-coating portion is a portion of the electrode collector uncoated with an electrode active material, and connects the electrode collector to the electrode tab. Accordingly, the space of the electrode non-coating portion is irrelevant to the actual performance of the secondary battery 210, and thus, may be minimized except for a space required by a process. Furthermore, the space required by a process may be used for another purpose.

To this end, according to the embodiment, the space of the electrode non-coating portion may be used as a space for recessing the foldable structures on the spacing edges of the lower and upper battery cases.

As the degree of recessing of the foldable structure of the electrode case increases, separation of the electrode tab in an emergency is facilitated. Thus, the degree of recessing of the foldable structure may be maximized. However, the degree of recessing is limited due to a compact configuration of the secondary battery . Thus, the space of the electrode non-coating portion may be used as a space for recessing the foldable structure, thereby achieving the compact configuration of the secondary battery without negatively affecting the electrode assembly.

As illustrated in FIG. 2, the battery case according to the embodiment is the same in structure as a well-known pouch-type battery case except that the battery case has the foldable structures on the spacing edges 120 and 130 of the lower battery case 20' and the upper battery case 30' in the protruding direction of the electrode leads.

That is, the battery case includes the space part 110 accommodating the electrode assembly , and the upper battery case 30' and the lower battery case 20' are coupled to each other through heat welding at the sealing part extending around the space part, thereby providing a pouch shape.

The foldable structure may have any shape provided that a bent surface is formed in a direction perpendicular to the protruding direction of the electrode leads.

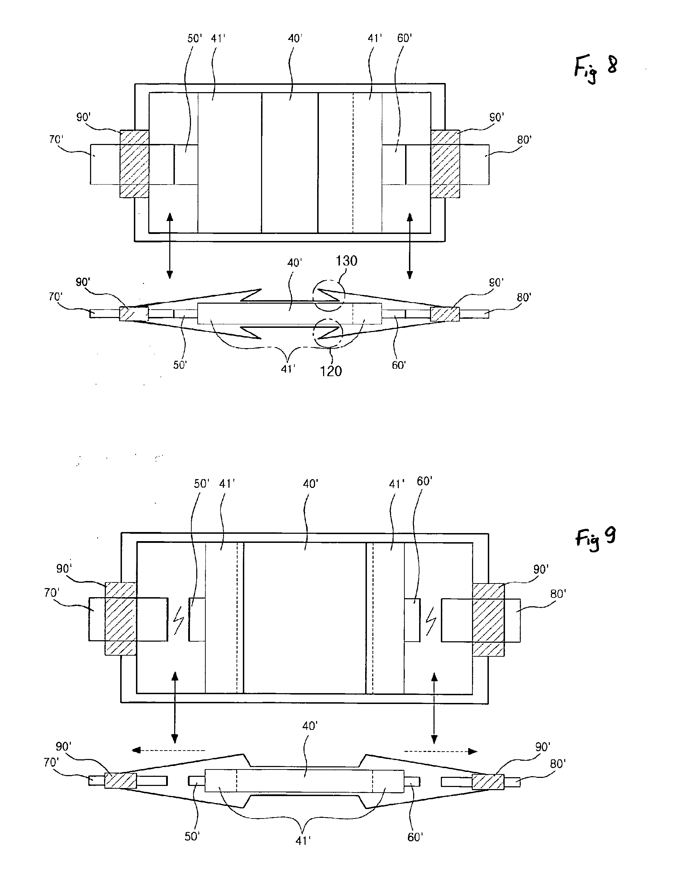

When the electrode leads protrude in both directions, bent surfaces may be formed in the direction perpendicular to the protruding direction of the electrode leads , and folded portions may be directed in opposite directions, that is, toward the electrode leads as illustrated in FIG. 2, or folded portions may face each other as illustrated in FIGS. 8 and , 9.

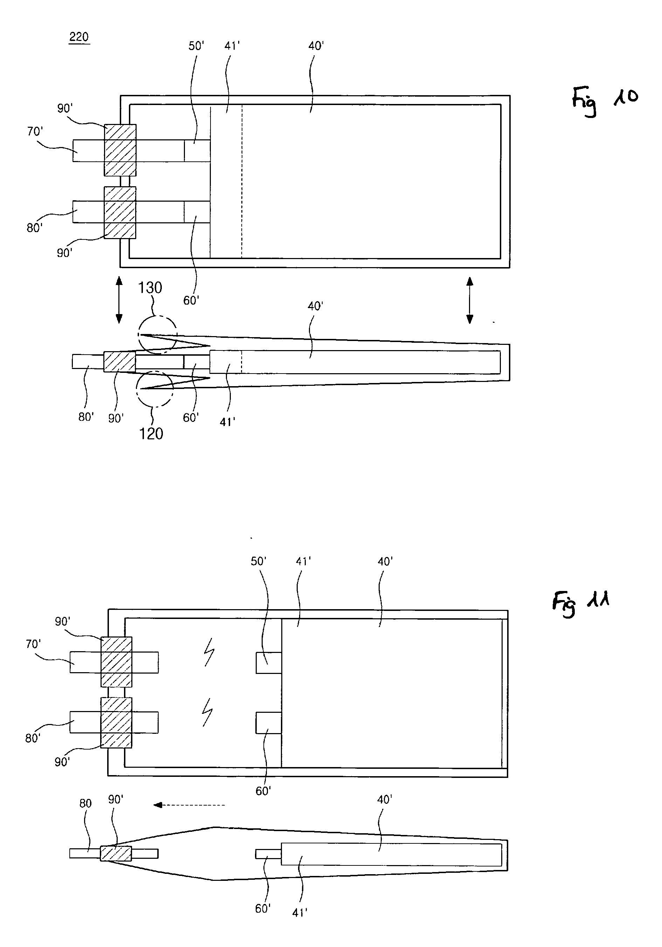

When the electrode leads protrude in the same direction, bent surfaces may be formed in the direction perpendicular to the protruding direction of the electrode leads , and be recessed and bent in a direction away from the electrode leads such that folded portions face the electrode leads as illustrated in FIGS. 10 and 11, or bent surfaces may be recessed and bent toward the electrode leads such that folded portions face the opposite side to that of the electrode leads .

For example, the foldable structure may be formed by heating and pressing a predetermined portion of the battery case with a heating jig having a shape corresponding to the foldable structure, but the present invention is not limited thereto.

The battery case may be constituted by a laminate sheet including a resin layer and a metal layer, and particularly, by an aluminum laminate sheet.

The laminate sheet includes an outer cover layer as a polymer film, a barrier layer as a metal film, and a polyolefin-based inner sealant layer. The outer cover layer has predetermined tensile strength and weatherability to efficiently resist the environment. To this end, an oriented nylon film or polyethylene terephthalate (PET) may be used to form the outer cover layer.

The barrier layer may be formed of aluminum to prevent introduction and discharge of a foreign substance such as gas and moisture, and reinforce the battery case. The inner sealant layer may be formed of a polyolefin based resin, which has heat welding property (heat adhesion) and low hygroscopicity to suppress introduction of electrolyte, and is resistant to expansion or corrosion due to electrolyte. More preferably, the inner sealant layer may be formed of cast polypropylene (cPP).

Insulating films 90' are attached to a portion of the top and bottom surfaces of the electrode leads 70' and 80' to improve sealing property and electrical insulation between the portion and the lower and upper battery cases 20' and 30'.

The sealing part of the battery case may further protrude outward than the foldable structures provided to the spacing edges 120 and 130.

Accordingly, after the electrode assembly 40' is accommodated in the space part , sealing of the lower battery case 20' and the upper battery case 30' through heat welding is further facilitated.

Any method may be used to form the secondary battery . For example, the secondary battery may be formed by accommodating the electrode assembly in the battery case having the foldable structures through cutting, and then sealing the lower battery case and the upper battery case through heat welding.

Furthermore, the battery case may have a rectangular parallelepiped shape with an opening part that is opened in a predetermined protruding direction of an electrode lead. A bending area of the opening part may be provided to a dotted line shaped fractured portion that facilitates the formation of the foldable structure together with the sealing of the battery case after the electrode assembly 40' is accommodated in the battery case.

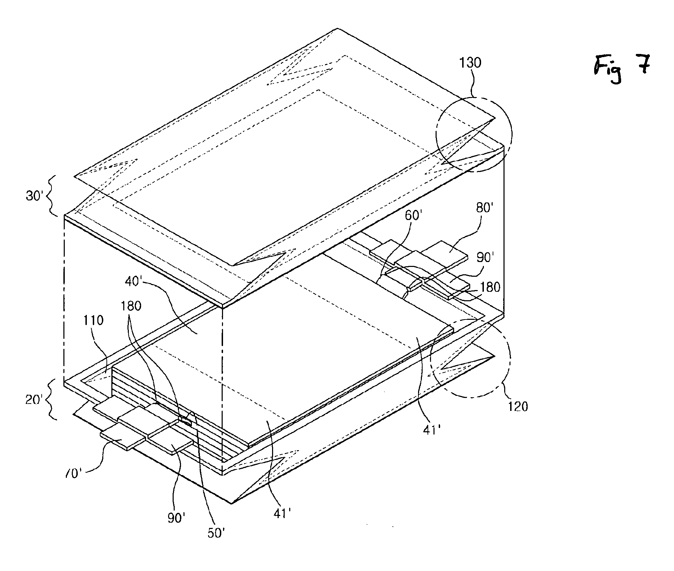

Referring to FIG. 7, one or more fractured recesses 180 may be disposed in welding portions connecting the electrode leads to the electrode tabs. Accordingly, when pressure generated in the secondary battery unfolds the foldable structures provided to the spacing edges , to thereby apply the pulling force to the electrode leads , the welding portions can be more efficiently broken.

The positions and the number of the fractured recesses 180 are not limited.

For example, the fractured recesses may be disposed at both sides of the welding portion. A distance between the fractured recess and the welding portion is not limited, provided that the fractured recess is disposed in the electrode leads and the electrode tabs in the battery case.

Also, the size and depth of the fractured recesses 180 are not limited, provided that the foldable structures of the battery case are unfolded in an emergency to more efficiently separate the electrode leads from the electrode tabs, without negatively affecting service life and functions of the secondary battery .

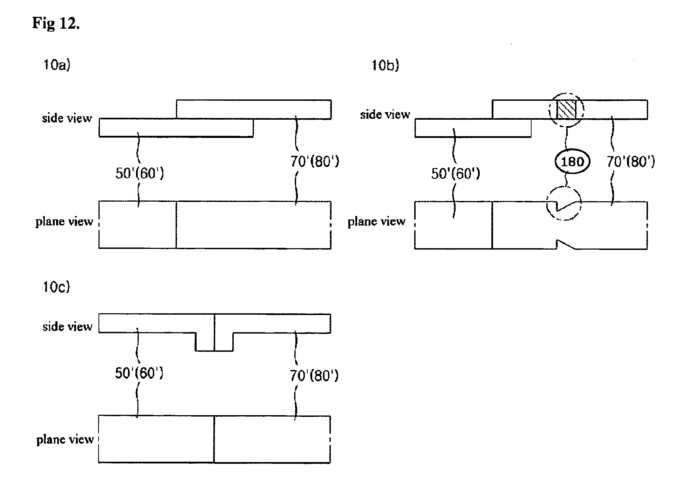

FIG. 12 is plan views and side views illustrating welding portions of electrode tabs and electrode leads, and a welding portion of an electrode tab and an electrode lead provided with fractured recesses 180.

Referring to FIG. 12 (10a), the welding portion of the electrode tab and the electrode lead may be formed by coupling their overlapping ends through soldering or ultrasonic welding. Alternatively, referring to 10C, ends of the electrode tab and the electrode lead may be bent, and then, the electrode tab and the electrode lead may be welded with bent surfaces contacting each other.

A pouch-type secondary battery according to the present invention may include any electrode assembly including a positive electrode, a negative electrode, and a separator disposed between the positive electrode and the negative electrode. For example, the electrode assembly may have a folding-type structure, a stack-type structure, a stack/folding-type structure, or stack/z-folding-type structure.

A secondary battery according to the present invention may be a lithium secondary battery, and particularly, be a so-called lithium ion polymer battery including an electrode assembly provided with electrolyte gel containing lithium.

A medium-to-large battery module according to the present invention includes the pouch-type secondary battery as a unit battery.

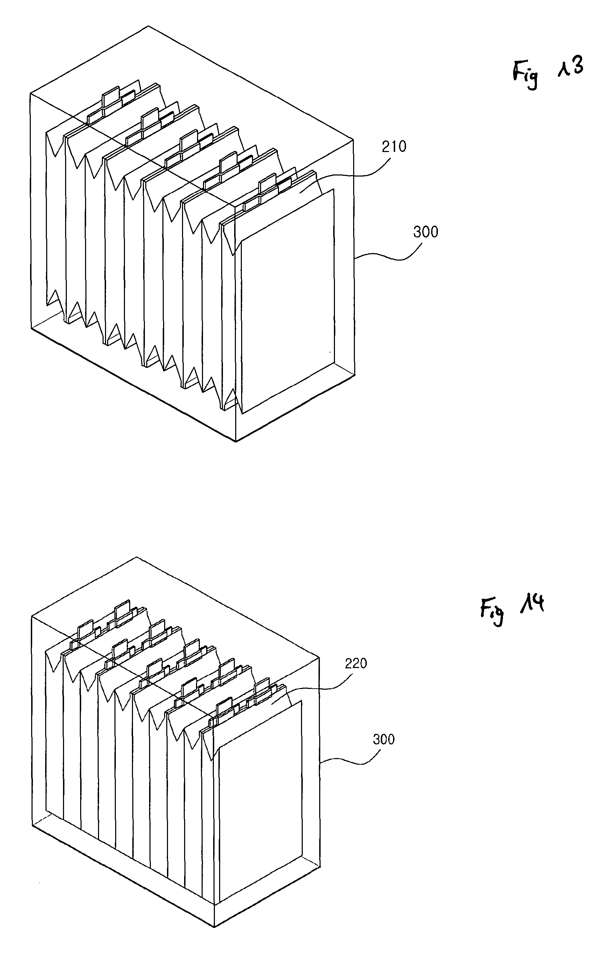

FIG. 13 is a perspective view illustrating a medium-to-large battery module including pouch-type secondary batteries with electrode leads protruding to both sides, according to an embodiment of the present invention. FIG. 14 is a perspective view illustrating a medium-to-large battery module including pouch-type secondary batteries with electrode leads protruding to one side, according to an embodiment of the present invention.

The pouch-type secondary batteries of the medium-to-large battery module may include pouch-type battery cases having the same foldable structures or different foldable structures.

A medium-to-large battery pack according to the present invention includes the medium-to-large battery module.

Particularly, a secondary battery according to the present invention may be applied to a high power and capacity battery having long service life and excellent durability, a medium-to-large battery module including a plurality of unit batteries using the high power and capacity battery as the unit battery, or a medium-to-large battery pack including a plurality of unit batteries using the high power and capacity battery as the unit battery.

The medium-to-large battery pack may be used as a power source for power tools; electric vehicles including an electric vehicle (EV), a hybrid electric vehicle (HEV), and a plug-in hybrid electric vehicle (PHEV); electric two-wheeled vehicles including an E-bike and an E-scooter; electric golf carts; electric trucks; and electric commercial vehicles.

Since the structure of the medium-to-large battery module or pack and a manufacturing method thereof are well known in the art, a description thereof will be omitted.

## Claims

1. A secondary battery (200, 210) comprising:
a pouch type battery case and a electrode assembly (40, 40');
wherein the pouch type battery case comprises a space part accommodating an electrode assembly, an upper battery case (30, 30'), a lower battery case (20, 20'), and a sealing part for sealing the upper and lower battery cases (30, 30', 20, 20'),
wherein each of the upper battery case (30, 30') and the lower battery case (20, 20') has a foldable structure formed by bending a spacing edge at least one time, and the spacing edge is disposed in a protruding direction of an electrode lead of the electrode assembly (40, 40'),
wherein the electrode assembly (40, 40') comprises a welding portion connecting an end of an electrode tab to an end of an electrode lead and at least one fractured recess (180) in an end of an electrode tab or an end of an electrode lead.

2. The secondary battery of claim 1, wherein the foldable structure is recessed and bent one time.

3. The secondary battery of claim 1, wherein the foldable structures provided to the spacing edges of the upper and lower battery cases (30, 30', 20, 20') are disposed only in the protruding direction of the electrode lead of the electrode assembly (40, 40').

4. The secondary battery of claim 3, wherein electrode leads of the electrode assembly (40, 40') protrude in the same direction.

5. The secondary battery of claim 4, wherein the foldable structure of the pouch-type battery case is recessed and bent in a direction away from the electrode lead such that a folded portion faces the electrode lead.

6. The secondary battery of claim 4, wherein the foldable structure of the pouch-type battery case is recessed and bent toward the electrode lead from an opposite side to that of the electrode lead such that a folded portion faces the opposite side.

7. The secondary battery of claim 1, wherein electrode leads of the electrode assembly (40, 40') protrude in both protruding directions, and
the spacing edges disposed over and under the electrode leads are provided with foldable structures recessed and bent in one direction.

8. The secondary battery of claim 7, wherein foldable structures of the pouch-type battery case are disposed in the protruding directions of the electrode leads, and folded portions face opposite sides.

9. The secondary battery of claim 7, wherein foldable structures of the pouch-type battery case are disposed in the protruding directions of the electrode leads, and folded portions face each other.

10. The secondary battery of claim 1, wherein a folded portion of the foldable structure has a length corresponding to an electrode non-coating portion (41) of the electrode assembly (40, 40').

11. The secondary battery of claim 1, further comprising a laminate sheet including a resin layer and a metal layer,
wherein the battery case is sealed through heating welding after the electrode assembly (40, 40') is accommodated in the space part.

12. The secondary battery of claim 11, wherein the laminate sheet comprises an aluminum laminate sheet.

13. The secondary battery of claim 1, wherein the welding portion is configured such that bent surfaces formed by bending the end of the electrode tab and the end of the electrode lead face each other.

14. The secondary battery of claim 1, wherein the fractured recess (180) is disposed in an end of the electrode tab or an end of the electrode lead within the pouch-type battery case.

15. The secondary battery of claim 1, wherein the secondary battery is a lithium polymer secondary battery.

16. A medium-to-large battery module (300) comprising:
a plurality of unit batteries using the secondary battery of claim 1 as the unit battery,
wherein the unit batteries are stacked toward both large side surfaces with respect to a protruding direction of an electrode lead of the secondary battery.

17. A medium-to-large battery pack comprising:
a plurality of unit medium-to-large battery modules using the medium-to-large battery module (300) of claim 16 as the unit medium-to-large battery module.

18. Use of the medium-to-large battery pack of claim 17 as a power source for power tools; electric vehicles including an electric vehicle (EV), a hybrid electric vehicle (HEV), and a plug-in hybrid electric vehicle (PHEV); electric two-wheeled vehicles including an E-bike and an E-scooter; electric golf carts; electric trucks; and electric commercial vehicles.

## Patentansprüche

1. Sekundär-Batterie (200, 210), umfassend:
einem Beutel-artigen Batteriegehäuse und einer Elektrodenanordnung (40, 40');
wobei das Beutel-artige Batteriegehäuse einen Raumteil umfasst, der eine Elektrodenanordnung, ein oberes Batteriegehäuse (30, 30'), ein unteres Batteriegehäuse (20, 20') und einen Dichtungsteil zum Abdichten der oberen und unteren Batteriegehäuse (30, 30', 20, 20') aufnimmt,
wobei jedes des oberen Batteriegehäuses (30, 30') und des unteren Batteriegehäuses (20, 20') eine faltbare Struktur aufweist, die durch zumindest einmal Biegen einer Abstandskante ausgebildet ist, und wobei die Abstandskante in einer vorstehenden Richtung einer Elektrodenleitung der Elektrodenanordnung (40, 40') angeordnet ist,
wobei die Elektrodenanordnung (40, 40') einen Schweißabschnitt aufweist, der ein Ende eines Elektrodenstreifens mit einem Ende einer Elektrodenleitung verbindet, und zumindest eine Bruchaussparung (180) in einem Ende eines Elektrodenstreifens oder einem Ende einer Elektrodenleitung.

2. Sekundär-Batterie nach Anspruch 1, wobei die faltbare Struktur einmal ausgespart und gebogen ist.

3. Sekundär-Batterie nach Anspruch 1, wobei die faltbaren Strukturen, die an den Abstandskanten der oberen und unteren Batteriegehäuse (30, 30', 20, 20') vorgesehen sind, lediglich in der vorstehenden Richtung der Elektrodenleitung der Elektrodenanordnung (40, 40') angeordnet sind.

4. Sekundär-Batterie nach Anspruch 3, wobei Elektrodenleitungen der Elektrodenanordnung (40, 40') in die gleiche Richtung vorstehen.

5. Sekundär-Batterie nach Anspruch 4, wobei die faltbare Struktur des Beutel-artigen Batteriegehäuses ausgespart und in eine Richtung weg von der Elektrodenleitung gebogen ist, derart dass ein gefalteter Abschnitt der Elektrodenleitung zugewandt ist.

6. Sekundär-Batterie nach Anspruch 4, wobei die faltbare Struktur des Beutel-artigen Batteriegehäuses ausgespart und zu der Elektrodenleitung hin gebogen ist, von einer gegenüberliegenden Seite zu derjenigen der Elektrodenleitung, derart dass ein gefalteter Abschnitt der gegenüberliegenden Seite zugewandt ist.

7. Sekundär-Batterie nach Anspruch 1, wobei Elektrodenleitungen der Elektrodenanordnung (40, 40') in beide vorstehende Richtungen vorstehen, und
wobei die Abstandskanten, die über und unter den Elektrodenleitungen angeordnet sind, mit faltbaren Strukturen versehen sind, die in eine Richtung ausgespart und gebogen sind.

8. Sekundär-Batterie nach Anspruch 7, wobei faltbare Strukturen des Beutel-artigen Batteriegehäuses in den vorstehenden Richtungen der Elektrodenleitungen angeordnet sind, und gefaltete Abschnitte gegenüberliegenden Seiten zugewandt sind.

9. Sekundär-Batterie nach Anspruch 7, wobei faltbare Strukturen des Beutel-artigen Batteriegehäuses in den vorstehenden Richtungen der Elektrodenleitungen angeordnet sind, und gefaltete Abschnitte einander zugewandt sind.

10. Sekundär-Batterie nach Anspruch 1, wobei ein gefalteter Abschnitt der faltbaren Struktur eine Länge entsprechend eines Elektroden-Nicht-Beschichtungsabschnitts (41) der Elektrodenanordnung (40, 40') aufweist.

11. Sekundär-Batterie nach Anspruch 1, ferner mit einem Laminatbogen, der eine Harzschicht und eine Metallschicht umfasst,
wobei das Batteriegehäuse durch Erwärmungsschweißen, nachdem die Elektrodenanordnung (40, 40') in dem Raumteil aufgenommen ist, abgedichtet ist.

12. Sekundär-Batterie nach Anspruch 11, wobei der Laminatbogen einen Aluminium-Laminatbogen umfasst.

13. Sekundär-Batterie nach Anspruch 1, wobei der Schweißabschnitt derart ausgestaltet ist, dass gebogene Oberflächen, die durch Biegen des Endes des Elektrodenstreifens und des Endes der Elektrodenleitung ausgebildet sind, einander zugewandt sind.

14. Sekundär-Batterie nach Anspruch 1, wobei die Bruchaussparung (180) in einem Ende des Elektrodenstreifens oder einem Ende der Elektrodenleitung innerhalb des Beutelartigen Batteriegehäuses angeordnet ist.

15. Sekundär-Batterie nach Anspruch 1, wobei die Sekundär-Batterie eine Lithium-Polymer-Sekundär-Batterie ist.

16. Mittelgroßes-bis-großes Batteriemodul (300), umfassend:
einer Vielzahl an Einheitsbatterien, welche die Sekundär-Batterie von Anspruch 1 als die Einheitsbatterie verwenden,
wobei die Einheitsbatterien zu beiden großen Seitenoberflächen bezüglich einer vorstehenden Richtung einer Elektrodenleitung der Sekundär-Batterie hin gestapelt sind.

17. Mittelgroße-bis-große Batteriepackung, umfassend:
einer Vielzahl an mittelgroßen-bis-großen Einheitsbatteriemodulen, die das mittelgroße-bis-große Batteriemodul (300) von Anspruch 16 als das mittelgroße-bis-große Einheitsbatteriemodul verwenden.

18. Verwendung der mittelgroßen-bis-großen Batteriepackung nach Anspruch 17 als eine Leistungsquelle für elektrische Werkzeuge; elektrische Fahrzeuge umfassend ein Elektrofahrzeug (EV), ein Hybrid-Elektrofahrzeug (HEV) und ein Plug-In-Hybrid-Elektrofahrzeug (PHEV); elektrische zweirädrige Fahrzeuge umfassend ein E-Bike und einen Elektroroller; elektrische Golfwägen; elektrische Lastwägen; und elektrische Nutzfahrzeuge.

## Revendications

1. Batterie secondaire (200, 210) comprenant :
un boîtier de batterie de type poche et un ensemble d'électrode (40, 40') ;
dans laquelle le boîtier de batterie de type poche comprend une partie d'espace logeant un ensemble d'électrode, un boîtier de batterie supérieur (30, 30'), un boîtier de batterie inférieur (20, 20') et une partie de scellement scellant les boîtiers de batterie supérieur et inférieur (30, 30', 20, 20'),
dans laquelle chacun du boîtier de batterie supérieur (30, 30') et du boîtier de batterie inférieur (20, 20') a une structure pliable formée en pliant un bord d'espacement au moins une fois, et le bord d'espacement est disposé dans une direction de saillie d'un fil d'électrode de l'ensemble d'électrode (40, 40'),
dans laquelle l'ensemble d'électrode (40, 40') comprend une portion de soudage connectant une extrémité d'une patte d'électrode à une extrémité d'un fil d'électrode et au moins une cavité fragmentée (180) dans une extrémité d'une patte d'électrode ou une extrémité d'un fil d'électrode.

2. Batterie secondaire selon la revendication 1, dans laquelle la structure pliable est mise en retrait et pliée une fois.

3. Batterie secondaire selon la revendication 1, dans laquelle les structures pliables disposées sur les bords d'espacement des boîtiers de batterie supérieur et inférieur (30, 30', 20, 20') sont disposées seulement dans la direction de saillie du fil d'électrode de l'ensemble d'électrode (40, 40').

4. Batterie secondaire selon la revendication 3, dans laquelle des fils d'électrode de l'ensemble d'électrode (40, 40') font saillie dans la même direction.

5. Batterie secondaire selon la revendication 4, dans laquelle la structure pliable du boîtier de batterie de type poche est mise en retrait et pliée dans une direction s'éloignant du fil d'électrode de manière qu'une portion pliée fasse face au fil d'électrode.

6. Batterie secondaire selon la revendication 4, dans laquelle la structure pliable du boîtier de batterie de type poche est mise en retrait et pliée vers le fil d'électrode à partir d'un côté opposé à celui du fil d'électrode de manière qu'une portion pliée fasse face au côté opposé.

7. Batterie secondaire selon la revendication 1, dans laquelle des fils d'électrode de l'ensemble d'électrode (40, 40') font saillie dans les deux directions en saillie, et
les bords d'espacement disposés sur et sous les fils d'électrodes sont pourvus de structures pliables mises en retrait et pliées dans une direction.

8. Batterie secondaire selon la revendication 7, dans laquelle des structures pliables du boîtier de batterie de type poche sont disposées dans les directions en saillie des fils d'électrode, et des portions pliées font face à des côtés opposés.

9. Batterie secondaire selon la revendication 7, dans laquelle des structures pliables du boîtier de batterie de type poche sont disposées dans les directions en saillie des fils d'électrode, et des portions pliées se font face.

10. Batterie secondaire selon la revendication 1, dans laquelle une portion pliée de la structure pliable a une longueur correspondant à une portion de non revêtement d'électrode (41) de l'ensemble d'électrode (40, 40').

11. Batterie secondaire selon la revendication 1, comprenant en outre une feuille de stratifié comprenant une couche de résine et une couche métallique,
dans laquelle le boîtier de batterie est scellé par chauffage-soudage après que l'ensemble d'électrode (40, 40') est logé dans la partie d'espace.

12. Batterie secondaire selon la revendication 11, dans laquelle la feuille de stratifié comprend une feuille de stratifié d'aluminium.

13. Batterie secondaire selon la revendication 1, dans laquelle la portion de soudage est configurée de manière à ce que des surfaces pliées formées en pliant l'extrémité de la patte d'électrode et l'extrémité du fil d'électrode se fassent face.

14. Batterie secondaire selon la revendication 1, dans laquelle la cavité fragmentée (180) est disposée dans une extrémité de la patte d'électrode ou une extrémité du fil d'électrode à l'intérieur du boîtier de batterie de type poche.

15. Batterie secondaire selon la revendication 1, dans laquelle la batterie secondaire est une batterie secondaire au polymère de lithium.

16. Module de batterie de taille moyenne à grande (300) comprenant :
une pluralité de batteries unitaires utilisant la batterie secondaire selon la revendication 1 comme la batterie unitaire,
dans lequel les batteries unitaires sont empilées vers les deux grandes surfaces latérales par rapport à une direction de saillie d'un fil d'électrode de la batterie secondaire.

17. Bloc de batterie de taille moyenne à grande comprenant :
une pluralité de modules de batterie de taille moyenne à grande unitaires utilisant le module de batterie de taille moyenne à grande (300) selon la revendication 16 comme le module de batterie de taille moyenne à grande unitaire.

18. Utilisation du bloc de batterie de taille moyenne à grande selon la revendication 17 comme une source d'alimentation pour des outils électriques ; des véhicules électriques comprenant un véhicule électrique (EV), un véhicule électrique hybride (HEV) et un véhicule électrique hybride rechargeable (PHEV) ; des véhicules à deux roues électriques comprenant une bicyclette électrique et un scooter électrique, des voiturettes de golf électriques ; des camions électriques ; et des véhicules commerciaux électriques.
